# EUROPÄISCHE PATENTSCHRIFT

(11) **EP 0 575 940 B1**
(45) Veröffentlichungstag und Bekanntmachung des Hinweises auf die Patenterteilung: **04.09.1996**
(21) Anmeldenummer: 93109885.9
(22) Anmeldetag: 21.06.1993
(51) Int. Cl.: E04D 11/00

(54) **Dachbegrünung für Flachdächer**
Turfing flat roofs
Gazonnage de toits flats

(30) Priorität: 22.06.1992 DE 4220334
(43) Veröffentlichungstag der Anmeldung: 29.12.1993
(73) Patentinhaber: METZELER SCHAUM GMBH, D-87700 Memmingen (DE)
(72) Erfinder: Müller, Alfred, D-5253 Lindlar (DE); Nordgerling, Rolf, D-4000 Düsseldorf 12 (DE)
(74) Vertreter: Preissner, Nicolaus, Dipl.-Ing.

(56) Entgegenhaltungen:
- EP-A- 0 204 883
- DE-A- 3 801 667
- DE-A- 3 936 264
- KUNSTSTOFFE IM BAU Bd. 19, Nr. 3, MÜNCHEN, DE, Seiten 140 - 142, FRANZ J. BRAUN 'Dränung begrünter Decken und Dächer mit EPS-Sickerplatten'
- KUNSTSTOFFE IM BAU Bd. 18, Nr. 2, MÜNCHEN, DE, Seite 53, FR-D. BALKOWSKI 'Wärmedämmung über einer Tiefgarage'
- DEUTSCHE BAUZEITSCHRIFT Nr. 4, April 1984, GÜTERSLOH, DE, Seiten 497 - 506, R. HOHRMANN 'Begrünte Dachflächen'
- CAHIERS DU CENTRE SCIENTIFIQUE ET TECHNIQUE DU BATIMENT Nr. 233, Oktober 1982, PARIS, FR, Seiten 1 - 9, SECRETARIAT DE LA COMMISSION DES AVIS TECHNIQUES CSTB 'Avis technique no. 5/82-387 : Bikutop 900 GR jardin (Sté. Asphaltoid Keller)'

## Beschreibung

Die Erfindung betrifft eine Dachbegrünung für Flachdächer oder schwach geneigte Dächer mit einer bauseitig aufgelegten Wurzelschutzbahn, einer Drainschicht aus vorgefertigten Platten, einem die vorgefertigten Platten abdeckenden Vlies, das als wasserdurchlässige Trennschicht dient, und einer Pflanzschicht.

Eine derartige Dachbegrünung ist aus der DE 33 12 402 A1 bekannt. Bei dieser Dachbegrünung besteht die Drainschicht im wesentlichen aus Lavaasche und zwar aus einer Schüttung mit einer Korngröße zwischen 5 und 30 mm.

Eine derartige Schüttung aus Lavaasche der angegebenen Korngröße ist zwar relativ leicht und daher für eine Dachbegrünung, deren Flächengewicht im Zustand einer maximalen Wasseraufnahme 120 kg/m² nicht überschreiten darf, gut geeignet. Das Aufbringen einer solchen Schicht ist jedoch mit einigem Aufwand verbunden und neigt in trockenem Zustand gerade beim Aufschütten zu einer erheblichen Staubbelästigung. Darüberhinaus ist gerade beim Verlegen auch der darüber befindlichen Schichten, wobei die Drainschicht noch begangen werden muß, eine glatte und einigermaßen gleich dicke Schicht nur mit Schwierigkeiten zu erreichen. Schließlich ist wegen den gerade bei grober Körnung vorhandenen relativ großen Zwischenräumen zwischen den einzelnen Körnern das tatsächliche Wasserspeichervermögen dieser Schicht nur mäßig zufriedenstellend. Partielle Dachsanierungen sind darüberhinaus bei einer derartigen Beschichtung mit erheblichem Aufwand verbunden.

Aus dem Artikel ,,Dränung begrünter Decken und Dächer mit EPS-Sickerplatten" von Franz J. Braun, Kunststoffe im Bau 1984, 140 ff, ist bekannt, zur Dachbegrünung auf einer Dachabdichtung eine Drain- und Schutzschicht vorzusehen, die aus Sickerplatten aus expandiertem Polystyrol (EPS) besteht. Derartige Platten dienen auf Grund ihres weichen, flächigen Kontakts neben ihrer Drainfunktion auch dem Bautenschutz. Unmittelbar auf den EPS-Sickerplatten ist eine Filter- und Trennschicht vorgesehen, wofür beispielsweise thermisch verfestigte, unverrottbare Spinnvliese aus Polyester verwendet werden können.

Der vorliegenden Erfindung liegt daher die Aufgabe zugrunde, einen Schichtenaufbau für eine Dachbegrünung anzugeben, die ein sehr viel höheres Wasserspeichervermögen aufweist und die darüberhinaus sehr einfach und schnell verlegt werden kann, ohne auch im Dauergebrauch Setz- oder Verrottungserscheinungen aufzuweisen.

Zur Lösung dieser Aufgabe ist erfindungsgemäß vorgesehen, daß die vorgefertigten Platten aus Verbundschaum mit einem spezifischen Gewicht von 80 bis 120 kg/m³ bestehen.

Ein derartiger Verbundschaum besteht aus granuliertem Polyurethan-Schaumstoff und insbesondere aus bei sonstiger Verarbeitung aus großen Schaumstoffblöcken anfallenden Schaumresten, wobei dieser granulierte Schaumstoff verpreßt und mit geeigneten Bindemitteln zu Platten oder Bahnen verbunden wird. Derartiger Verbundschaum ist bei entsprechender Zusammensetzung und der Art des verwendeten Schaumstoffgranulats verrottungsfest, beständig gegen Huminsäuren sowie gegen alkalische und saure Bodenwässer und weist ein Wasserspeichervermögen auf, das bis zum 10-fachen seines Eigengewichtes reicht.

Für den vorliegenden Anwendungsfall als Drainschicht werden zweckmäßigerweise Verbundschaumplatten in einer Dicke von bis zu 5 cm verwendet.

Als darüberliegende Trennschicht wird zweckmäßigerweise ein Vlies aus einem Polypropylen-Spinnvlies mit einer Dicke von etwa 0,5 cm verwendet.

Das Vlies ist zweckmäßigerweise vollflächig die Verbundschaumplatten und deren Stoßfugen überdeckend aufgelegt.

Als oberste Pflanzschicht eignet sich besonders eine Substratschicht mit Düngemittelbeigaben, die in einer Schichtdicke von 4 bis 6 cm eben aufgebracht ist.

Die Substratschicht kann dabei aus etwa 10 % Vulkanton, 20 % Torf, 25 % Rindenhumus und 45 % Bimskies oder Blähschiefer bestehen, welche Zusammensetzung sich als besonders zweckmäßig erwiesen hat.

Bezüglich einer solchen Dachbegrünung ist auch überschüssiges Wasser, das das Rückhaltevermögen der Drainschicht übersteigt, abzuführen, wozu üblicherweise in die unterhalb der Dachbegrünung liegenden Decke Gullys eingelassen sind. In Weiterbildung der Erfindung ist hierbei unterhalb der Vliesbahn im Bereich des mit der Deckenoberkante abschließenden Gullys die Verbundschaumbahn entsprechend freigeschnitten und der Gully mit einem hochgewölbtem Sieb abgedeckt.

Dabei kann die an den Gully anschließende Kante der Verbundschaumplatte sich nach unten konisch erweiternd ausgeschnitten sein derart, daß sich die Schnittfläche angenähert an die Außenfläche des hochgewölbten Siebes anlegt.

Ferner ist es für die Wasserabführung zweckmäßig, wenn der Bereich oberhalb des den Gully überdeckenden Vlieses und ein benachbarter Verbundschaumbereich von der übrigen Pflanzschicht mit Kanzhölzern abgetrennt und mit einer groben Kiesschüttung belegt ist.

Anhand einer schematischen Zeichnung sind Aufbau und Funktionsweise von Ausführungsbeispielen nach der Erfindung näher erläutert. Dabei zeigen:
- Figur 1: einen Längsschnitt durch den Schichtenaufbau einer solchen Dachbegrünung und
- Figur 2: eine solche Dachbegrünung im Bereich eines Wasserabführungs-Gullys.

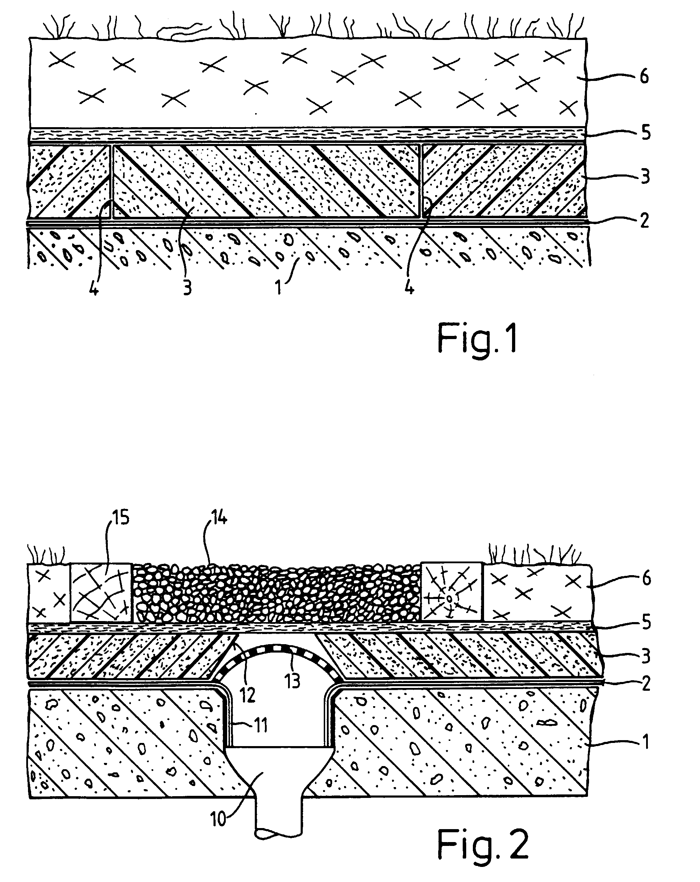

Wie man aus Fig. 1 ersieht, ist auf die Betondecke 1 des Daches zunächst eine dichte Wurzelschutzbahn 2 in Form einer flüssigkeitsdichten Folie, die auch nicht durchwurzelt werden kann, aufgelegt. Auf dieser Wurzelschutzbahn 2 ist die eigentliche Drainschicht in Form von Platten 3 aus Verbundschaum aufgelegt, wobei die Schnittkanten 4 dicht aneinanderstoßen. Diese Platten 3 weisen zweckmäßigerweise eine Dicke von 4 cm auf, wobei die Plattengröße etwa 1 x 2 m betragen kann. Verwendet wird ein Verbundschaum mit einem spezifischen Gewicht von etwa 80 bis 120 kg/m³, wodurch sich beispielsweise bei einem Verbundschaum von 80 kg/m³ eine Flächenbelastung von 3,2 kg/m² ergibt. Derartige Verbundschaumplatten sind verrottungsfest, beständig gegen Huminsäuren sowie alkalische und saure Bodenwässer und können weder durch Mikroorganismen, wie z.B. Bakterien oder Pilze, noch durch im Boden lebende Molusken und Insektenlarven zerstört werden. Darüberhinaus verhalten sie sich im Boden auf Dauer chemisch und physikalisch neutral, wobei auch keine schädigenden Wechselwirkung mit bitumösen oder anderen marktgängigen Abdichtungs- und Wurzelschutzbahnen aus Kunststoffen bestehen, so daß gesonderte Trenn- oder Schutzanlagen nicht erforderlich sind.

Das Wasserspeichervermögen eines solchen Verbundschaumes kann etwa bis zum 10-fachen seines Eigengewichtes betragen, wobei überschüssiges Wasser langsam abgegeben wird. Durch diese hohe Wasserspeicherfähigkeit wird sogar in Trockenperioden ein Fortbestand der Vegetation ermöglicht. Das sehr gute Drainierungsverhalten dieser Platten sichert auch bei starken Niederschlägen eine rasche und kontinuierliche Entwässerung der Vegetationsebene und verhindert so eine mögliche Pfanzenschädigung durch Staunässe.

Oberhalb dieser Drainschicht aus Verbundschaumplatten 3 ist dann ein Spinnvlies 5 aus Polypropylen angeordnet mit einer Stärke von etwa 0,5 cm. Derartige Polypropylen-Spinnvliese sind sogenannte Geotextilien und genügen ingenieurbiologischen Anwendungen auf Dauer. Im erdverbauten Zustand unterliegen sie weder chemischen noch biologischen Einwirkungen. Darüberhinaus ist ein Abbau durch Mikroorganismen oder Kleinlebewesen nicht gegeben. Sie weisen eine hohe mechanische Festigkeit und ein fast unbegrenztes Zeitstandverhalten auf, so daß sie als Filterschicht besonders geeignet sind.

Oberhalb dieses Vlieses 5 ist jetzt die eigentliche Pflanzschicht 6 aus einer Substratschicht mit Düngemittelbeigaben in einer Schichtdicke von etwa 4 - 6 cm eben aufgebracht.

Für eine solche Substratschicht eignet sich besonders eine Mischung aus etwa 10 % Vulkanton, 20 % Torf, 25 % Rindenhumus und 45 % Bimskies oder Blähschiefer, wobei den drei erstgenannten Bestandteilen Düngemittelbeigaben in Form von Stickstoff, Phosphor und Kalium beigefügt werden können.

Der vorstehend beschriebene Schichtenaufbau für die Dachbegrünung hat eine Gesamtdicke von etwa 10 cm und eignet sich besonders für einen extensiven Bewuchs geeigneter Pflanzengruppen, wie z.B. Sedum, Festica, Carex, Achiläa und anderen. Ein derartiger Bewuchs gedeiht langfristig ohne wesentliche Pflege und bildet nach Durchwurzelung einen festen Zusammenhalt der aufgebrachten Schichten.

Das vorstehend beschriebene Gründach im angegebenen Schichtenaufbau weist im trockenen Zustand ein spezifisches Flächengewicht von etwa 55 kg/m² auf, während es wassergesättigt etwa 115 kg/m² wiegt und damit den amtlichen Richtlinien für einen ökologischen Schutzbelag entspricht, bei dem ein Flächengewicht von unter 120 kg/m² vorgeschrieben ist.

Das beschriebene Gründach kann dabei auf Flachdächern oder auch auf bis zu 20° geneigten Dächern ohne zusätzliche Schutzmaßnahmen eingesetzt werden.

Ein solches Gründach bewirkt eine Verbesserung des Kleinklimas in seiner Umgebung, da es einmal Wasser zurückhält und bei Überschuß nur langsam an die Kanalisation abgibt. Darüberhinaus geben die Pflanzen Feuchte nach außen ab. Gleichzeitig ergibt sich ein Schutz der Dachhaut und insbesondere ein wesentlicher Temperaturausgleich, der für eine konstante Dachtemperatur sorgt. Bei normal unbegrünten Flachdächern ergeben sich - über das Jahr gesehen - Temperaturunterschiede von mehr als 100°C. Ein Gründach ergibt jedoch Dachtemperaturen von maximal 30°C, wobei auch bei strengem Frost im allgemeinen eine Dachtemperatur von +8°C eingehalten wird.

Für eine geregelte Abführung überschüssigen Wassers ist ein Aufbau zweckmäßig, wie er in Figur 2 dargestellt ist. Dabei sind in die Betondecke 1 des Daches in vorgegebenen Abständen Gullys 10 eingebaut, die mit der Oberkante der Betondecke 1 abschließen. Die Wurzelschutzbahn 2 ist dabei zweckmäßigerweise mit überlappenden Bereichen 11 bis in den Gully 10 hereingezogen, um damit auch die Kantenbereiche gegen Fehlwasser zu sichern. Die anschließenden Verbundschaumplatten 3 sind im Bereich des Gullys sich nach unten konisch erweiternd ausgeschnitten, so daß sich eine schräge Schnittkante 12 ergibt. Der Gully 10 selbst ist mit einem hochgewöbtem Sieb 13 abgedeckt, wobei die Schnittkanten 12 der Verbundschaumblöcke 3 so geneigt sein können, daß sie sich in etwa an die hochgewölbte Siebwandung 13 anlegen. Oberhalb des Polypropylen-Vlieses 5, das unmittelbar über dem freigeschnittenen Bereich des Gullys 10 verläuft, sowie angrenzende Bereich der Verbundschaumplatten 3 sind mit einer losen Kiesschüttung 14 versehen, die von den benachbarten Pflanzschichten 6 durch umlaufende Kanzhölzer 15 abgetrennt. Dadurch wird einmal ein zu hohes Flächengewicht oberhalb des Gullys 10 vermieden und zum anderen verhindert, daß eine sich etwa oberhalb des Gullys befindliche Pflanzschicht zu schnell entwässert und trockenfällt.

Insgesamt ergibt sich also ein Gründachaufbau, der allen ökologischen Anforderungen optimal genügt und gegenüber bekannten Dachbegrünungen im wesentlichen die folgenden Vorteile aufweist. Der verwendete Verbundschaum für die Drainschicht weist eine hohe Wasserspeicherungsfähigkeit auf und gewährt eine sichere, kontinuierliche Drainleistung für Überschußwasser. Im Zusammenwirken mit dem Vlies und der Erdschicht bietet er eine optimale Vegetationsgrundlage für eine extensive Begrünung und bildet eine vollflächige, neutrale Schutzabdeckung für die darunter befindliche Abdichtungs- und Wurzelschutzschicht. Darüberhinaus ermöglichen solche Schaumstoffplatten eine einfache, rationelle, leicht kontrollierbare und damit sehr kostengünstige Verlegeweise sowie eine unkomplizierte, saubere Demontagemöglichkeit im Schadensfall, die sehr einfach auch nur abschnittsweise erfolgen kann.

## Patentansprüche

1. Dachbegrünung für Flachdächer oder schwach geneigte Dächer mit einer bauseitig aufgelegten Wurzelschutzbahn (2), einer Drainschicht aus vorgefertigten Platten (3), einem die vorgefertigten Platten (3) abdeckenden Vlies (5), das als wasserdurchlässige Trennschicht dient, und einer Pflanzschicht (6), dadurch gekennzeichnet, daß die vorgefertigten Platten (3) aus Verbundschaum mit einem spezifischen Gewicht von 80 bis 120 kg/m³ bestehen.

2. Dachbegrünung nach Anspruch 1, dadurch gekennzeichnet, daß die Verbundschaumplatten (3) eine Dicke von bis zu 5 cm aufweisen.

3. Dachbegrünung nach Anspruch 1, dadurch gekennzeichnet, daß das Vlies (5) aus Polypropylen-Spinnvlies besteht und eine Dicke von etwa 0,5 cm aufweist.

4. Dachbegrünung nach Anspruch 1 bis 3, dadurch gekennzeichnet, daß das Vlies (5) vollflächig die Verbundschaumplatten (3) und deren Stoßfugen (4) überdeckend aufgelegt ist.

5. Dachbegrünung nach Anspruch 1, dadurch gekennzeichnet, daß als Pflanzschicht eine Substratschicht (6) mit Düngemittelbeigaben in einer Schichtdicke von 4 - 6 cm eben aufgebracht ist.

6. Dachbegrünung nach Anspruch 5, dadurch gekennzeichnet, daß die Substratschicht (6) aus etwa 10 % Vulkanton, 20 % Torf, 25 % Rindenhumus und 45 % Bimskies oder Blähschiefer besteht.

7. Dachbegrünung nach einem oder mehreren der Ansprüche 1 bis 6 mit Abführung überschüssigen Wassers über in die Decke eingelassene Gullys, dadurch gekennzeichnet, daß unterhalb der Vliesbahn (5) im Bereich des mit der Deckenoberkante abschließenden Gullys (10) die Verbundschaumplatten (3) entsprechend freigeschnitten und der Gully (10) mit einem hochgewölbten Sieb (13) abgedeckt ist.

8. Dachbegrünung nach Anspruch 7, dadurch gekennzeichnet, daß die an den Gully (10) anschließende Kante der Verbundschaumplatten (3) sich nach unten konisch erweiternd ausgeschnitten ist, derart, daß sich die Schnittfläche (12) angenähert an die Außenfläche des hochgewölbten Siebes (13) anlegt.

9. Dachbegrünung nach Anspruch 7 oder 8, dadurch gekennzeichnet, daß der Bereich oberhalb des den Gully (10) überdeckenden Vlieses (5) und benachbarter Verbundschaumbereich von der übrigen Pflanzschicht (6) mit Kanthölzern (15) abgetrennt und mit einer groben Kiesschüttung (14) versehen ist.

## Claims

1. Roof turfing for flat roofs or slightly sloping roofs with a root protection strip (2) laid on the building side, a drain layer of prefabricated panels (3), a fleece (5) covering the prefabricated panels (3), which serves as water-permeable separation layer, and a planting layer (6), characterized in that the prefabricated panels (3) comprise composite foam with a specific weight of 80 to 120 kg/m³.

2. Roof turfing according to Claim 1, characterized in that the composite foam panels (3) have a thickness of up to 5 cm.

3. Roof turfing according to Claim 1, characterized in that the fleece (5) comprises polypropylene spun fleece and has a thickness of approx. 0.5 cm.

4. Roof turfing according to Claim 1 to 3, characterized in that the fleece (5) is applied to cover the full surface of the composite foam panels (3) and their joint gaps (4).

5. Roof turfing according to Claim 1, characterized in that a substrate layer (6) with fertilizer additions is evenly applied in a layer thickness of 4-6 cm.

6. Roof turfing according to Claim 5, characterized in that the substrate layer (6) comprises approx. 10% volcanic clay, 20% peat, 25% bark humus and 45% pumice or expanded shale.

7. Roof turfing according to one or more of Claims 1 to 6 with discharge of surplus water via gullys let into the ceiling, characterized in that underneath the fleece strip (5) in the region of the gully (10) terminating with the upper edge of the ceiling the composite foam panels (3) are correspondingly cut away and the gully (10) is covered with a high-arched strainer (13).

8. Roof turfing according to Claim 7, characterized in that the edge of the composite foam panels (3) adjoining the gully (10) is cut out downwards in a conically widening manner in such a way that the cut surface (12) rests close to the outer surface of the high-arched strainer (13).

9. Roof turfing according to Claim 7 or 8, characterized in that the region above the fleece (5) covering the gully (10) and adjacent composite foam region is separated from the remaining planting layer (6) with squared edge timbers (15) and is provided with a coarse gravel packing (14).

## Revendications

1. Revêtement de verdure pour des toits plats ou des toits en pente douce, comportant une bande protectrice de racines (2) posée sur le toit, une couche de drainage constituée par des plaques préfabriquées (3), une nappe (5) recouvrant les plaques préfabriquées (3) qui sert de couche de séparation perméable à l'eau, et une couche de plantation (6), caractérisé en ce que les plaques préfabriquées (3) sont constituées en une mousse composite d'un poids spécifique de 80 à 120 kg/m³.

2. Revêtement de verdure de toit selon la revendication 1, caractérisé en ce que les plaques en mousse composite (3) présentent une épaisseur allant jusqu'à 5 cm.

3. Revêtement de verdure de toit selon la revendication 1, caractérisé en ce que la nappe (5) est constituée par une nappe filée en polypropylène et présente une épaisseur d'environ 0,5 cm.

4. Revêtement de verdure de toit selon l'une quelconque des revendications 1 à 3, caractérisé en ce que la nappe (5) est posée de manière à recouvrir sur toute la surface les plaques en mousse composite (3) et leurs joints (4).

5. Revêtement de verdure de toit selon la revendication 1, caractérisé en ce que l'on dépose comme couche de plantation de manière plane une couche de substrat (6) contenant des additifs d'engrais d'une épaisseur de couche de 4 à 6 cm.

6. Revêtement de verdure de toit selon la revendication 5, caractérisé en ce que la couche de substrat (6) est constituée par environ 10 % de "vulcantone", 20 % de tourbe, 25 % d'humus d'écorce et 45 % de ponce ou de schiste gonflant.

7. Revêtement de verdure de toit selon l'une ou plusieurs des revendications 1 à 6, avec évacuation de l'eau excédentaire via des goulottes agencées dans le plafond, caractérisé en ce qu'au-dessous de la bande de nappe (5) dans la région de la goulotte (10) en affleurement avec l'arête supérieure du plafond, les plaques en mousse composite (3) sont découpées de façon correspondante, et en ce que la goulotte (10) est recouverte d'un tamis (13) bombé vers le haut.

8. Revêtement de verdure de toit selon la revendication 7, caractérisé en ce que l'arête des plaques en mousse composite (3) qui se raccorde à la goulotte (10) est découpée de manière à s'élargir coniquement vers le bas, de telle sorte que la surface de découpe (12) s'appuie approximativement à la surface extérieure du tamis (13) bombé vers le haut.

9. Revêtement de verdure de toit selon l'une ou l'autre des revendications 7 et 8, caractérisé en ce que la région au-dessus de la nappe (5) recouvrant la goulotte (10) et la région de mousse composite voisine sont séparées de la couche de plantation restante (6) par des bois à section rectangulaire (15), et sont pourvues d'un remplissage en gravier grossier (14).
